# FASCICULE DE BREVET EUROPEEN

(11) **EP 3 028 807 B1**
(45) Date de publication et mention de la délivrance du brevet: **05.07.2017**
(21) Numéro de dépôt: 15192720.9
(22) Date de dépôt: 03.11.2015
(51) Int. Cl.: B23Q 9/00

(54) **MACHINE-OUTIL COMPORTANT UN RAIL LONGITUDINAL, UN BRAS TRANSVERSAL, ET UNE UNITÉ MOTORISÉE**
WERKZEUGMASCHINE, DIE EINE LÄNGSSCHIENE, EINEN QUERARM UND EINE MOTORISIERTE EINHEIT UMFASST
MACHINE TOOL COMPRISING A LONGITUDINAL RAIL, A TRANSVERSE ARM AND A MOTOR UNIT

(30) Priorité: 03.12.2014 FR 1461847
(43) Date de publication de la demande: 08.06.2016
(73) Titulaire: Airbus Operations (S.A.S.), 31060 Toulouse (FR)
(72) Inventeur: ALBERT, Fabien, 31000 Toulouse (FR)
(74) Mandataire: Gicquel, Olivier Yves Gérard

(56) Documents cités:
- US-A- 5 468 099
- US-A1- 2010 122 444
- US-A1- 2013 289 766

## Description

La présente invention concerne une machine-outil pour la réalisation d'opérations à la surface d'une pièce, notamment de grandes dimensions, par exemple la réalisation de perçages sur un élément de fuselage d'aéronef.

Elle porte plus généralement sur le domaine des machines-outils employées pour réaliser des opérations automatisées ou semi-automatisées, typiquement des opérations d'usinage ou de montage, sur des pièces ou des structures de grandes dimensions.

La fabrication des fuselages d'avion ou d'autres structures aéronautiques telles que des ailes est réalisée de manière connue par l'assemblage de panneaux rigides, généralement métalliques, sur une structure. Pour cela, les panneaux, plans ou courbes, sont mis en position sur la structure et assemblés à celle-ci par exemple par rivetage. Cela nécessite de pouvoir usiner l'ensemble une fois les panneaux en position, typiquement afin de réaliser les perçages nécessaires au rivetage.

Ces opérations sont réalisables par un opérateur. Le développement de robots de grandes dimensions susceptibles de réaliser les perçages sur la totalité d'un fuselage est onéreux.

Afin de réaliser ces perçages ou d'autres opérations d'usinage simples sur des ensembles de grandes dimensions, de manière rapide et avec précision, des dispositifs ont néanmoins été développés afin d'automatiser en partie ces opérations. Par exemple, le document US-A-2010/0122444 divulgue une machine-outil pour la réalisation d'opérations sur une pièce, comportant un rail longitudinal configuré pour être positionné vis-à-vis de la pièce, un bras transversal orthogonal au rail longitudinal et monté en translation sur le rail longitudinal, et un outil porté par le bras transversal, ainsi qu'une unité motorisée comportant un système de déplacement pour ramper sur la pièce parallèlement au rail longitudinal. Par exemple, le document EP1761360 présente une machine-outil comportant deux rails flexibles parallèles fixés sur la structure à usiner. La fixation des rails sur la structure est réalisée à l'aide de ventouses. Un moyen d'usinage, typiquement une perceuse, se déplace entre les deux rails, le long d'un module transversal.

Un tel dispositif est cependant compliqué à mettre en oeuvre, en ce qu'il comporte deux rails devant être parfaitement parallèles. En outre, par construction, la largeur entre les deux rails, et la surface pouvant être atteinte par l'outil d'usinage, sont limités. Enfin, un tel dispositif n'est pas adapté à une surface présentant une double courbure importante, du fait de la difficulté à positionner deux rails parallèles sur une telle surface. Une double courbure prononcée est présente dans certaines zones des structures aéronautiques et notamment de certains fuselages.

La présente invention a pour but de proposer une machine-outil optimisée permettant de résoudre au moins l'un des inconvénients précités.

A cette fin, l'invention porte donc sur une machine-outil pour la réalisation d'opérations sur une pièce comportant :
- un rail longitudinal configuré pour être positionné vis-à-vis de la pièce ;
- un bras transversal, orthogonal au rail longitudinal, comportant une première extrémité montée en translation sur le rail longitudinal ;
- un outil porté par le bras transversal ;
- au moins une unité motorisée disposée à une seconde extrémité du bras transversal et comportant :
   ∘ un système de déplacement pour ramper sur la pièce parallèlement au rail longitudinal ;
   ∘ au moins une ventouse permettant le maintien en position de l'unité sur la pièce ;
   ∘ un dispositif de génération de vide, configuré pour mettre en dépression la ventouse;
l'unité motorisée étant articulée par rapport au bras transversal selon un pivot d'axe parallèle audit bras transversal.

La machine-outil comporte un rail longitudinal unique. Le rail peut être positionné fixement vis-à-vis de la pièce. Une telle machine-outil est simple à mettre en oeuvre car nécessitant la mise en position d'un seul rail. Elle est adaptée à la réalisation d'opérations sur une pièce présentant une surface à double courbure, car elle ne nécessite pas la mise en position de deux rails parallèles et comporte une unité motorisée dont l'orientation vis-à-vis de la pièce est adaptable grâce à un pivot d'axe parallèle audit bras transversal. Si l'unité motorisée est liée au bras transversal par un support intermédiaire, le pivot peut être positionné entre l'unité et le support, ou entre le support et le bras transversal. Deux pivots peuvent aussi être mis en oeuvre.

Elle est adaptée aux structures de grandes dimensions, et permet des opérations sur une grande surface. En effet, un bras transversal d'une longueur importante, par exemple de l'ordre de 1200mm, peut être mis en oeuvre. Le bon maintien du bras transversal est garanti par la fixation ou le contrôle permanent en position de ses deux extrémités, respectivement sur le rail longitudinal d'une part et sur la pièce par une ventouse d'autre part, lors d'une opération réalisée sur la pièce.

Selon un mode de réalisation de l'invention, le système de déplacement comporte une chenille dont une bande de roulement comporte une pluralité de ventouses.

De préférence, la machine-outil selon ce mode de réalisation comporte en outre un distributeur pour la répartition du vide issu du dispositif de génération de vide vers les ventouses de la bande de roulement de la chenille.

Le distributeur peut par exemple comporter une poulie montée en rotation sur un cylindre de distribution, la poulie comportant sur une face latérale des orifices régulièrement répartis en cercle, le cylindre de distribution comportant, sur une face en contact avec la face latérale de la poulie comportant les orifices, une rainure en arc de cercle en regard d'au moins l'un des orifices de la poulie. La rainure ayant une forme d'arc de cercle peut avantageusement s'étendre sur un angle compris entre 90° et 180°.

Selon un autre mode de réalisation de l'invention le système de déplacement comporte une roulette motorisée. Dans ce mode de réalisation, l'unité 5 peut comporter un capot extérieur comportant une face ouverte autour de laquelle est disposée une jupe périphérique, l'ensemble capot extérieur et jupe périphérique formant une ventouse permettant le maintien en position de l'unité sur la pièce.

La jupe périphérique peut par exemple comporter un revêtement en polytétrafluoroéthylène.

Selon encore un autre mode de réalisation de l'invention, le système de déplacement comporte au moins deux éléments motorisés, positionnés de part et d'autre de la ventouse. Dans ce mode de réalisation, les éléments motorisés peuvent notamment être des roulettes ou des chenilles.

La machine-outil peut comporter un ou plusieurs groupes de deux ventouses, deux éléments motorisés étant positionnés de part et d'autre de chaque groupe de deux ventouses.

Dans chaque mode de réalisation précité, la machine-outil peut comporter deux unités motorisées, réparties de part et d'autre du bras transversal.

Le bras transversal peut comprendre un système de déplacement de l'outil en translation le long du bras transversal. L'outil peut notamment être choisi parmi : une perceuse, une meuleuse, une sonde tribologique, un dispositif d'insertion de rivet, un dispositif de rivetage, un pistolet à mastic, un pistolet peinture. Le montage en translation du bras transversal sur le rail longitudinal est avantageusement réalisé par un module lié rigidement au bras transversal et monté en translation sur le rail longitudinal.

Dans un mode de réalisation, la machine-outil peut comporter un dispositif de commande, arrangé de sorte à synchroniser le mouvement de l'unité au mouvement de la première extrémité du bras transversal le long du rail longitudinal.

La machine-outil peut alors comporter des moyens de détermination des efforts générés par le bras transversal sur le rail longitudinal, lesdits moyens de détermination des efforts étant fonctionnellement liés au dispositif de commande, et le dispositif de commande étant configuré pour minimiser lesdits efforts.

La machine-outil peut comporter un dispositif choisi parmi : un capteur de tour lié à une pièce en rotation du dispositif de déplacement, un capteur d'effort sur le bras transversal et un capteur d'effort sur le rail longitudinal, un capteur angulaire configuré pour déterminer l'angle entre le bras transversal et le rail longitudinal.

La fixation du rail longitudinal sur la pièce est avantageusement réalisée à l'aide de ventouses de fixation. A cette fin, le rail longitudinal comporte avantageusement des ventouses de fixation.

D'autres particularités et avantages de l'invention apparaîtront encore dans la description ci-après.

Aux dessins annexés, donnés à titre d'exemples non limitatifs :
- la figure 1, présente schématiquement une machine-outil selon un mode de réalisation de l'invention, ainsi que son environnement immédiat ;
- la figure 2 présente une vue de détail d'une unité motorisée telle que mise en oeuvre dans un premier mode de réalisation de l'invention, selon une vue schématique en trois dimensions.
- La figure 3 présente une vue schématique de l'intérieur de l'unité représentée à la figure 2 ;
- La figure 4 présente schématiquement les éléments principaux d'un distributeur de vide pouvant être mis en oeuvre dans une unité selon le premier mode de réalisation présenté aux figures 2 et 3.
- La figure 5 présente une vue de détail d'une unité motorisée telle que mise en oeuvre dans un deuxième mode de réalisation de l'invention, selon une vue schématique en trois dimensions ;
- La figure 6 présente une vue schématique de l'intérieur de l'unité représentée à la figure 5 ;
- La figure 7 présente une vue de détail d'une unité motorisée telle que mise en oeuvre dans un troisième mode de réalisation de l'invention, selon une vue schématique en trois dimensions.
- La figure 8 présente schématiquement une machine-outil selon un mode de réalisation de l'invention mettant en oeuvre l'unité motorisée de la figure 7, ainsi que son environnement immédiat.

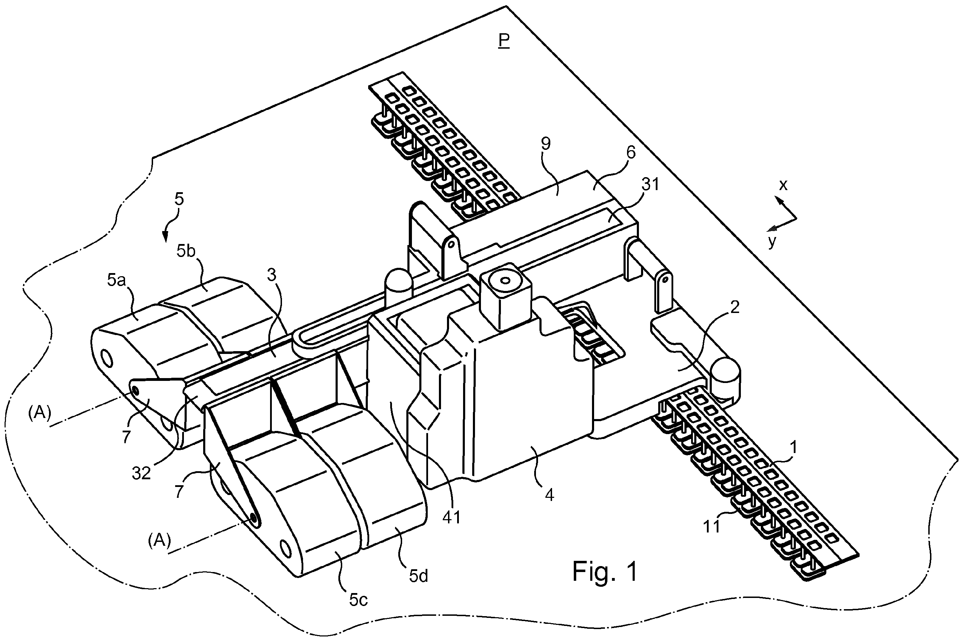

Une machine-outil selon l'invention comporte un rail longitudinal 1, comme représenté en figure 1. Le rail longitudinal 1 comporte dans un mode de réalisation de l'invention des ventouses de fixation 11, permettant d'en assurer la fixation sur une pièce P sur laquelle des opérations par exemple d'usinage sont à mener. Ici, le rail longitudinal 1 est flexible et peut ainsi suivre la courbure de la pièce P. Un module 2 est monté sur le rail longitudinal 1 et peut se déplacer en translation sur ce dernier. Le module 2 peut être équipé d'un ensemble de roulements serrés sur le rail. De plus, le module 2 est avantageusement équipé d'au moins un moteur entraînant sa translation sur le rail longitudinal 1.

Un bras transversal 3 est fixé au module 2, au niveau d'une première extrémité 31 du bras transversal 3. Le bras transversal 3 est, et reste, sensiblement orthogonal au rail longitudinal 1. Le bras transversal 3 peut se déplacer en translation le long du rail longitudinal 1. Dans l'exemple ici représenté, cette translation est directement liée à la translation du module 2 le long du rail longitudinal 1. Le module 2 peut être conformé afin de recevoir une unité de puissance 9, contenant l'électronique de puissance des dispositifs mis en jeu dans la machine-outil. Dans une application aéronautique, le bras transversal peut présenter une longueur autorisant des usinages sur 1200mm environ.

Un outil 4, typiquement un outil d'usinage, est lié au bras transversal 3. L'outil 4 peut comporter en pratique un module, tel qu'une plateforme multifonctionnelle, qui se connecte au bras transversal 3 via une interface, ce module contenant au moins un outil de travail (qui peut être par exemple un outil d'usinage, un moyen de mesure, un outil de dépôt d'un revêtement). Le module de l'outil 4 peut également comporter d'autres fonctions, comme la gestion du positionnement par un ensemble de capteurs inertiels permettant de connaitre la position de l'outil de travail, ou codeurs linéaires ou rotatifs en amont de l'outil final. Le module contenant l'outil de travail sert ainsi à assurer la liaison mécanique de l'outil 4 au bras transversal 3, à apporter les énergies nécessaires au fonctionnement de l'outil de travail, et à en assurer la fonctionnalité grâce à divers périphériques tels que des vérins, des capteurs, etc. Le module de l'outil 4 peut assurer également la gestion de l'orthogonalité du bras transversal par un système composé de capteurs de position type PSD (pour Position Sensitive Device). L'outil 4 est, dans l'exemple ici représenté, conformé pour se déplacer en translation le long du bras transversal 3. L'outil 4 est donc en liaison glissière avec le bras transversal 3. L'outil 4 peut notamment être un moyen d'usinage à proprement parler ou un moyen d'usinage fixé à un support lui-même lié au bras transversal 3.

L'outil 4 peut notamment être une perceuse, ou un outil de perçage appelé « unité de perçage automatique ». Il peut également s'agir à titre d'exemples et de manière non exhaustive d'un outil de découpage, de meulage, de contrôle dimensionnel, de contrôle non destructif par exemple à ultra-sons, de détection de trous borgnes, d'application de mastic, d'application de colle, d'application de peinture.

La translation de l'outil 4 le long du bras transversal 3 peut être motorisée.

Les moteurs entraînant le mouvement du module 2 le long du rail longitudinal et/ou celui de l'outil 4 le long du bras transversal 3 peuvent être du type « pas à pas ». Ils sont avantageusement associés à un système de commande électronique (non représenté) permettant d'en assurer le contrôle en position. En alternative, le mouvement de l'outil 4 le long du bras transversal 3 peut également être réalisé par un moteur agissant sur une vis sans fin.

Ainsi, la position de l'outil peut être très précisément contrôlée dans un repère orthogonal ayant un axe parallèle au rail longitudinal (position dite en « x ») et un axe parallèle au bras transversal (position dite en « y »).

Tout autre dispositif par ailleurs connu dans l'état de la technique permettant de piloter et contrôler la position de l'outil selon ces deux axes peut également être employé.

L'outil peut également, selon diverses variantes de l'invention, être piloté en orientation selon trois axes de rotation orthogonaux, ou selon l'un, ou deux, de ces trois axes.

Le bras transversal 3 de la machine-outil comporte une unité 5. L'unité 5 est fixée à une seconde extrémité 32 du bras transversal 3. Selon le dimensionnement de la machine-outil, l'unité 5 peut comporter une à plusieurs unités élémentaires. L'unité 5 est motorisée, et comporte plus particulièrement un système de déplacement pour ramper sur la pièce P parallèlement au rail longitudinal.

Dans l'exemple ici représenté, l'unité 5 comprend plusieurs unités élémentaires 5a, 5b, 5c et 5d qui sont fixées au bras transversal 3 chacune par un élément de liaison 7. Chaque unité élémentaire 5a-5d est articulée par rapport au bras transversal selon un pivot d'axe (A) parallèle audit bras transversal. Chaque unité élémentaire 5a-5d comporte au moins une ventouse, connectée à un dispositif de génération de vide (non représenté). La ventouse, qui n'est pas visible à la figure 1, permet le maintien en position de l'unité 5 vis-à-vis de la pièce P, lors d'une opération sur la pièce P pouvant générer des efforts dans le bras transversal 4. Chaque unité élémentaire 5a-5d est ici montée en pivot sur un élément de liaison 7 lié rigidement au bras transversal 3. Les axes (A) des pivots sont typiquement parallèles à l'axe transversal 3 et perpendiculaires au rail longitudinal 1, de sorte à permettre aux unités 5 d'être parfaitement en contact avec la pièce P, même si ladite pièce P présente un rayon de courbure prononcé dans la direction du rail longitudinal 1.

Le mouvement de l'unité 5 motorisée est avantageusement contrôlé par un dispositif de commande 6. Le dispositif de commande 6 est, dans la variante de l'invention ici représentée, lié à l'unité 5. Le dispositif de commande 6 peut, selon diverses variantes, présenter diverses localisations et caractéristiques. Le dispositif de commande 6, en alternative à une position liée à l'unité 5, peut être porté par le module 2, ou par tout autre élément de la machine-outil. II peut être extérieur à la machine-outil. Le dispositif de commande 6 peut également employer les mêmes moyens physiques (calculateurs, etc.) que les moyens commandant le déplacement du module 2 sur le rail longitudinal 1. Enfin, les données de commandes issues du dispositif de commande peuvent être transmises à l'unité 5 par des moyens filaires ou sans fil.

Un dispositif de commande 6 vise à synchroniser le mouvement de l'unité 5 motorisée à celui du module 2 le long du rail longitudinal 1.

Sur une surface plane, le mouvement de l'unité 5 doit être identique à tout instant à celui du module 2 le long du rail longitudinal 1, afin d'assurer un déplacement identique et simultané de ces éléments. A contrario, lors d'une utilisation de la machine-outil sur une surface présentant une double courbure, par exemple à l'avant du fuselage d'un aéronef, la vitesse de l'unité 5 doit être différente de la vitesse du module 2 afin d'assurer que l'unité 5 et le module 2 se déplacent de manière synchronisée, bien que la distance à parcourir par l'unité 5 et le module 2 soit différente. Le dispositif de commande 6 permet une telle gestion des déplacements de l'unité 5 et du module 2.

En outre, la synchronisation du mouvement de l'unité 5 et du module 2 le long du rail longitudinal 1 permet un positionnement plus précis du bras transversal 3.

Enfin, la machine-outil peut être dotée de moyens de détermination des efforts générés par le bras transversal au niveau de sa liaison avec le rail longitudinal en liaison avec le dispositif de commande 6. Il peut typiquement s'agir de capteurs ou de jauges de contraintes, permettant la détermination du couple dans la liaison entre le rail longitudinal 1 et le bras transversal 3.

Les moyens de détermination des efforts sont fonctionnellement liés au dispositif de commande 6. Le dispositif de commande 6 reçoit donc les mesures des capteurs, et, en fonction de ces mesures, commande le mouvement de l'unité 5, par sa motorisation, de sorte à minimiser les efforts générés par le bras transversal au niveau de sa liaison avec le rail longitudinal.

D'une manière générale, la machine-outil peut comporter un ensemble de moyens de contrôle géométriques (non illustrés) permettant d'identifier les déformations (flexions, torsions) susceptibles d'affecter la précision du positionnement de l'outil 4, et de corriger ce positionnement via une boucle de correction.

En particulier, le contrôle du déplacement de l'unité 5, et donc de la seconde extrémité 32 du bras transversal 3, peut mettre en oeuvre divers dispositifs alternatifs ou complémentaires. Un capteur de tours peut être employé pour connaître et piloter la position en rotation d'une roulette ou de la poulie d'une chenille du système de déplacement de l'unité 5. Le capteur de tour peut être positionné sur toute pièce en rotation du système de déplacement : roulette, poulie de chenille, pignon, arbre de moteur, etc. Un capteur d'effort peut être disposé sur le bras transversal 3 conjointement à un autre capteur d'effort positionné sur le rail longitudinal, permettant de déterminer l'écart d'effort mesuré entre ces deux capteurs. Un capteur de position angulaire peut être positionné au niveau de la liaison entre le bras transversal 3 et le rail longitudinal 1, afin de mesurer l'angle formé entre le rail longitudinal 1 et le bras transversal 3, et le cas échéant l'écart d'angle par rapport aux 90° théoriques entre le rail longitudinal 1 et le bras transversal 3.

De manière générale, le ou les capteurs mis en oeuvre sont liés à un calculateur permettant de comparer une ou plusieurs valeurs mesurées à un seuil prédéfini, afin d'appliquer le cas échéant une correction à la commande du système de déplacement de l'unité 5.

Dans le mode de réalisation représenté en figure 1, les quatre unités élémentaires sont réparties de part et d'autre du bras transversal 3. L'utilisation de plusieurs unités élémentaires peut offrir plusieurs avantages : il est par exemple possible d'adapter la force de maintien exercée sur la pièce aux contraintes générées par les opérations d'usinage en choisissant d'installer le nombre adéquat d'unités, ou par exemple d'améliorer la fiabilité du système, la défaillance de l'une des unités n'entraînant pas nécessairement la défaillance de la machine-outil.

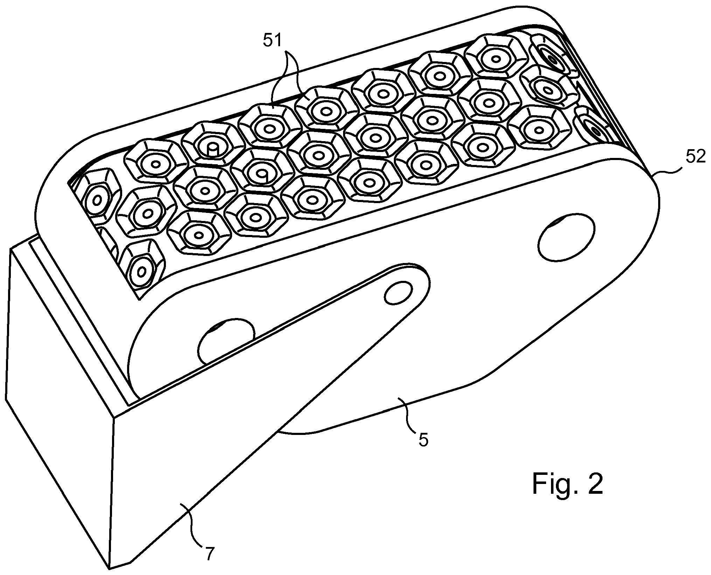

La figure 2 présente un premier mode de réalisation particulier d'une unité motorisée 5, pouvant être employé seule ou dans un ensemble d'unités élémentaires selon diverses variantes de réalisation de l'invention, selon une vue schématique en trois dimensions. A la figure 2, un élément de liaison 7 conformé pour permettre la liaison entre l'unité 5 et le bras transversal est également représenté.

A la figure 2, la face visible de l'unité 5 portant la ventouse 51 correspond à la face destinée à être en regard de la pièce P.

L'unité 5 est motorisée. La motorisation de l'unité 5 permet de piloter son déplacement sur la pièce P, parallèlement au rail longitudinal 1. L'unité 5 ici représentée comporte une chenille 52 en tant que système de déplacement. L'unité 5 ainsi motorisée est adaptée pour ramper sur la pièce P parallèlement au rail longitudinal 1. De manière générale, un dispositif ainsi constitué pour se mouvoir lentement ou ramper sur une surface est communément désigné par le terme « chenillard » ou le terme anglophone « crawler ».

Plus particulièrement, l'unité 5 comporte une chenille 52 dont la bande de roulement comporte plusieurs ventouses 51. Chaque ventouse 51 est mise en dépression par un dispositif de génération de vide, ou centrale de génération de vide, et un circuit de mise en dépression (non représenté).

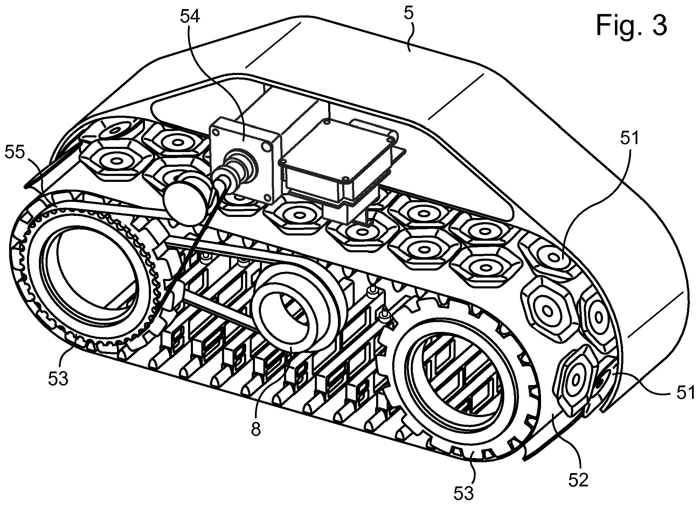

Tel que représenté à la figure 3, qui présente une vue schématique de l'intérieur de l'unité représentée à la figure 2, la chenille 52 peut comporter par exemple deux poulies 53, dont au moins une est dite motrice, c'est-à-dire mise en rotation pour entraîner le défilement de la bande de la chenille 52. La mise en rotation de la ou des poulies 53 motrices peut être réalisée à l'aide d'un moteur électrique 54 dont un arbre de sortie porte un pignon s'engrenant dans une courroie crantée 54, cette dernière étant en prise sur la ou les poulies 53 motrices.

Les ventouses 51 de la bande sont actives, mise en dépression par un dispositif de génération de vide. Les ventouses 51 sont ainsi employées en tant que moyen de maintien de l'unité 5 lors de l'usinage de la pièce P, sans qu'une ventouse supplémentaire ne soit nécessaire pour cette fonction. L'unité 5 est ainsi maintenue contre ladite pièce par les ventouses actives qui servent de moyen de maintien.

Dans le premier mode de réalisation ici représenté, les ventouses 51 sont avantageusement mises en dépression uniquement lorsqu'elles sont en contact avec la pièce P.

Au fur et à mesure du défilement de la bande de la chenille 52, les ventouses 51 quittant le contact avec la pièce ne sont plus mises en dépression, tandis qu'une dépression est générée dans les ventouses 51 nouvellement en contact avec la pièce.

La distribution du vide vers les ventouses 51 peut être réalisée à l'aide d'un distributeur 8 comportant plusieurs sorties de vide, chaque sortie étant reliée à une ou plusieurs ventouses, par exemple au moyen de conduits souples ou durits. Typiquement, une sortie du distributeur 8 peut mettre en dépression plusieurs ventouses réparties transversalement sur la bande de roulement de la chenille 52.

Le distributeur 8 est avantageusement de type rotatif dans ce mode de réalisation de l'invention, et est synchronisé au mouvement de la bande de roulement de la chenille.

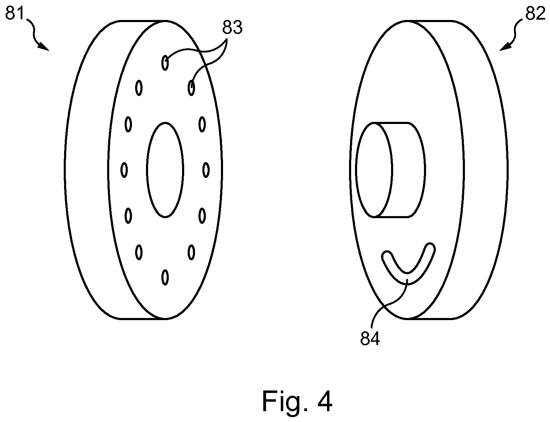

La figure 4 présente schématiquement les éléments principaux d'un distributeur 8 de vide selon une variante de réalisation.

Le distributeur peut comporter une poulie de distribution 81 portant des prises d'air sur lesquelles sont raccordées les durits de distribution du vide. La poulie de distribution 81 peut être entraînée en rotation par une courroie tel que représenté à la figure 3, ladite courroie étant elle-même liée à une autre poulie de la chenille ou à des moyens d'entraînement de la chenille.

L'ensemble est configuré de sorte que la poulie de distribution 81 du distributeur 8 rotatif fasse un tour complet à chaque tour complet de la bande de roulement de la chenille 52 (c'est-à-dire chaque fois qu'un point de la bande de roulement revient à sa position initiale).

Afin de ne mettre en dépression que les ventouses 51 en contact avec la pièce, la poulie de distribution 81 est ici montée en rotation sur un cylindre de distribution 82. Les prises d'air pour mettre en dépression les ventouses 51 sont par exemple réparties sur la surface périphérique externe ou sur une face latérale de la poulie de distribution 81. Des conduits sont ménagés à l'intérieur de la poulie de distribution et débouchent, par exemple, sur une face latérale de la poulie de distribution en autant d'orifices 83 que la poulie porte de prises d'air. Le cylindre de distribution 82 est fixe et est configuré pour présenter, en regard des orifices de la poulie de distribution à mettre en dépression, un évidement 84 mis en dépression par les moyens de génération de vide. L'évidement 84 peut typiquement avoir une forme d'arc de cercle sur 90° à 180°, pour mettre en dépression les orifices 83 de la poulie de distribution situés sur un arc de cercle correspondant. Les orifices 83 qui sont ainsi mis en dépression sont liés aux ventouses en contact à l'instant considéré avec la pièce P qu'ils mettent en dépression.

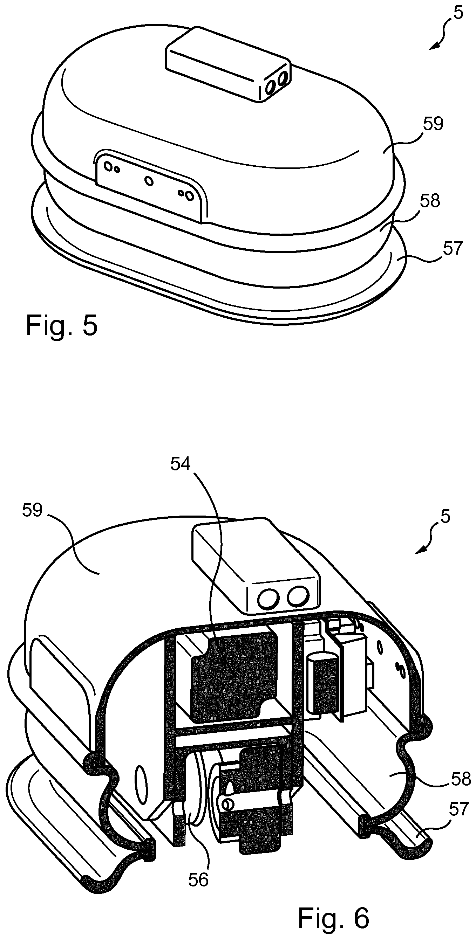

La figure 5 présente une vue de détail d'une unité motorisée telle que mise en oeuvre, seule ou dans un ensemble d'unités élémentaires, dans un second mode de réalisation de l'invention dans lequel le système de déplacement de l'unité 5 met en oeuvre une roulette 56. La figure 6 présente une vue schématique de l'intérieur de l'unité 5 représentée à la figure 6, selon une vue en coupe transversale de ladite unité 5 de la figure 5.

L'unité 5 toute entière se comporte comme une ventouse, grâce à une jupe périphérique 57, montée autour d'une face ouverte d'un capot 59 de l'unité 5. La jupe périphérique 57 peut être constituée d'un matériau souple comme du caoutchouc ou de la silicone, ou d'un matériau rigide tel que de l'acier ou un matériau plastique rigide. La jupe 57 présente avantageusement un faible coefficient de friction sur l'acier, notamment dans la zone destinée à être en contact avec la pièce P sur laquelle des opérations sont à réaliser. Typiquement, au moins cette zone de la jupe 57 peut présenter un revêtement en polytétrafluoroéthylène (également connu sous l'appellation Téflon (marque déposée)).

Dans l'exemple ici représenté, la jupe 57 est rigide. L'unité 5 comporte en outre un soufflet 58 destiné à plaquer la jupe contre la pièce sur laquelle des opérations sont réalisées, de sorte que l'unité 5 s'adapte aux variations de formes de cette pièce P.

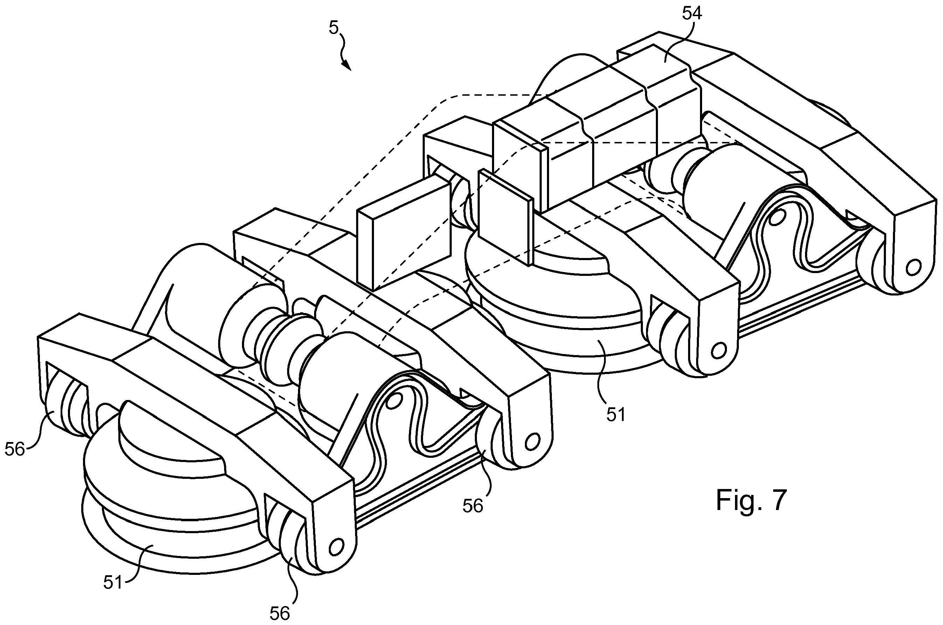

L'unité 5 selon l'exemple de mode de réalisation représenté aux figures 6 et 7 comporte une structure interne au capot 59 à l'intérieur duquel une dépression peut être établie, de sorte que l'unité 5 entière forme une ventouse. La structure interne de l'unité 5 supporte une ou plusieurs roulettes 56. Les roulettes 56 peuvent présenter avantageusement un coefficient de friction élevé sur l'acier. Elles peuvent être réalisées notamment en matière caoutchouteuse. Les roulettes 56 sont maintenues en permanence contre la pièce sur laquelle des opérations sont réalisées. Une ou plusieurs roulettes 56 sont entrainées en rotation à l'aide d'un moteur électrique 54 dont un arbre de sortie porte un pignon d'entraînement. Le pignon porté par le moteur électrique 54 est lié à un dispositif de transmission pouvant comporter une courroie crantée ou une cascade de pignons. Les forces de friction entre les roulettes 56 et la pièce sur laquelle elles roulent permettent le déplacement de l'unité 5 sur ladite pièce.

Une ou plusieurs unités 5 motorisées selon le mode de réalisation présenté aux figures 5 et 6 peuvent être montées à la seconde extrémité 32 du bras transversal 3. Notamment, deux unités motorisées peuvent être mises en oeuvre.

La figure 7 présente une vue de détail d'une unité motorisée telle que mise en oeuvre dans un troisième mode de réalisation de l'invention.
Dans ce troisième mode de réalisation, le système de déplacement comporte au moins deux éléments motorisés, positionnés de part et d'autre d'une ventouse 51. Dans la variante ici représentée, les éléments motorisés sont des roulettes 56. Dans une autre variante non représentée, les roulettes 56 sont remplacées par des chenilles.

Dans ce mode de réalisation, l'unité 5 peut comporter un ou plusieurs groupes de deux ventouses, deux éléments motorisés étant positionnés de part et d'autre de chaque groupe de deux ventouses.

Dans la variante ici représentée du troisième mode de réalisation, l'unité 5 comporte huit roulettes 56, disposées par paires de part et d'autre de quatre ventouses. Selon des variantes non représentées de ce mode de réalisation, l'unité 5 peut comporter deux, quatre, six, dix ou douze roulettes. Les ventouses sont réalisées dans un matériau dont le coefficient de friction sur le matériau de surface de la pièce P est faible (par exemple du polymère à renfort fibre de carbone généralement désigné par l'acronyme anglophone CFRP pour « Carbon-fiber-reinforced polymer » ou de l'aluminium, avec ou sans un revêtement de protection de type peinture), ou présentent un revêtement dont le coefficient de friction sur le matériau de surface de la pièce sur laquelle des opération sont menées est faible. Par exemple, du Téflon (marque déposée) peut être employé. Le dispositif de génération de vide permet la mise en dépression de la ou des ventouses 51, ou, le cas échéant, d'une ventouse ou de certaines ventouses seulement de l'unité 5.

Les roulettes 56 peuvent présenter avantageusement un coefficient de friction élevé sur le matériau de surface de la pièce sur laquelle des opérations sont menées. Elles peuvent être réalisées notamment en matière caoutchouteuse. Les roulettes 56 sont maintenues en permanence contre la pièce sur laquelle des opérations sont réalisées. Une ou plusieurs roulettes sont entrainées en rotation à l'aide d'un moteur électrique 54 dont un arbre de sortie porte un pignon d'entraînement. Le pignon porté par le moteur électrique 54 est lié à un dispositif de transmission pouvant comporter une courroie crantée ou une cascade de pignons. Les forces de friction entre les roulettes 56 et la pièce sur laquelle elles roulent permettent le déplacement de l'unité 5 sur ladite pièce.

Dans ce troisième mode de réalisation, tout comme dans les deux modes de réalisation précédemment décrits, plusieurs unités 5 peuvent être mises en oeuvre.

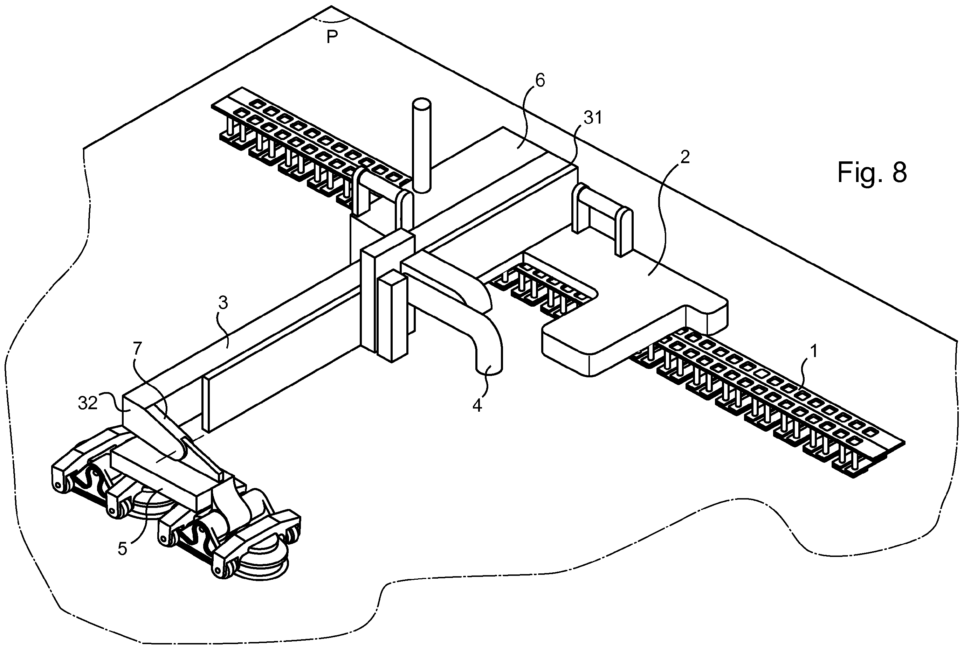

La figure 8 présente schématiquement une machine-outil selon un mode de réalisation de l'invention mettant en oeuvre l'unité motorisée de la figure 7, ainsi que son environnement immédiat. Dans ce mode de réalisation, la machine-outil présente la même architecture générale que la machine-outil de la figure 1, dont elle diffère essentiellement par l'unité 5 mise en oeuvre. La machine-outil comporte notamment un rail longitudinal 1, représenté à la figure 8 fixé sur une pièce P sur laquelle des opérations par exemple d'usinage sont à mener. Un module 2 est monté sur le rail longitudinal 1 et peut se déplacer en translation sur ce dernier. Un bras transversal 3, orthogonal au rail longitudinal 1, est fixé au module 2, au niveau d'une première extrémité 31. Le bras transversal 3 peut se déplacer en translation le long du rail longitudinal 1.

Un outil 4 est lié au bras transversal 3 via un module. L'outil 4 est, dans l'exemple ici représenté, conformé pour se déplacer en translation le long du bras transversal 3. Le bras transversal 3 de la machine-outil comporte une unité 5 motorisée conforme au mode de réalisation représenté sur la figure 7. L'unité 5 est fixée à une seconde extrémité 32 du bras transversal 3. Elle est contrôlée par le dispositif de commande 6.

Dans tous les modes de réalisation d'unité 5 motorisée précédemment décrits, et en particulier dans les deuxième et troisième modes de réalisation, il peut être avantageux de faire varier la force générée par les moyens de maintien. Ainsi, il peut être avantageux de faire varier la dépression dans les ventouses. Par exemple, lorsque la pièce sur laquelle des opérations sont réalisées est assimilable à un cylindre horizontal, comme peut l'être un fuselage d'avion, la force de gravité s'exerçant sur l'unité 5 tend à l'écarter de la pièce lorsqu'une opération est réalisée en partie basse de cette dernière, tandis qu'elle tend à la plaquer sur la pièce lorsqu'une opération est réalisée en partie haute de cette dernière. Typiquement, l'unité 5 peut comporter un accéléromètre et/ou des capteurs inertiels configurés pour permettre la détermination de sa position et/ou de son orientation afin de garantir un comportement homogène de la machine-outil quelle que soit son orientation.

Dans tous les modes de réalisation de l'invention, le dispositif de génération de vide peut être commun à la mise en dépression des ventouses 51 et aux ventouses de fixation 11.

Bien évidemment, d'autres modes de réalisation ou variantes de la machine-outil peuvent être envisagés sans sortir du cadre de l'invention.

En particulier, d'autres moyens de fixation du rail longitudinal 1 sur la pièce P peuvent être employés, par exemple des moyens magnétiques.

Dans une autre variante de l'invention, le rail longitudinal 1 ne comporte pas de moyens de fixation directe sur la pièce à usiner. Dans cette variante, le rail longitudinal 1 n'est pas posé sur la pièce P ou en contact avec cette dernière, mais fait partie d'une installation environnante ou « poste de travail ». Le rail longitudinal 1 est alors positionné fixement vis-à-vis de la pièce, par immobilisation de la pièce P par rapport au poste de travail.

La machine-outil ainsi développée permet la réalisation d'opérations automatisées ou semi-automatisées, notamment des opérations d'usinages simples, à la surface d'une pièce de grandes dimensions pouvant être courbe, comme par exemple un élément de fuselage d'aéronef. Un seul rail étant à positionner en tant que référence longitudinale sur la pièce, la machine-outil développée peut être adaptée, selon le mode de réalisation considéré, aux structures présentant une double courbure. Elle est en outre facile à installer, de sorte que, typiquement, un seul opérateur peut suffire à sa mise en oeuvre. Elle permet la réalisation d'opérations, par exemple d'usinage, sur une surface importante grâce à une grande longueur de bras. Cela est rendu possible par l'immobilisation ou le contrôle permanent en position des deux extrémités du bras lors des opérations réalisées sur la pièce, rendue possible par la mise en oeuvre d'une unité motorisée comportant un système de déplacement pour ramper sur la pièce sur laquelle des opérations sont réalisées, et au moins une ventouse de maintien en position sur ladite pièce. La machine-outil développée est en outre facilement reconfigurable, et peut accueillir de nombreux types d'outils permettant de nombreux types d'usinages, assemblages, ou contrôles.

## Revendications

1. Machine-outil pour la réalisation d'opérations sur une pièce comportant :
• un rail longitudinal (1) configuré pour être positionné vis-à-vis de la pièce;
• un bras transversal (3), orthogonal au rail longitudinal (1), comportant une première extrémité (31) montée en translation sur le rail longitudinal (1) ;
• un outil (4) porté par le bras transversal (3);
• au moins une unité (5) motorisée disposée à une seconde extrémité (32) du bras transversal (3) et comportant :
∘ un système de déplacement pour ramper sur la pièce parallèlement au rail longitudinal (1) ;
∘ au moins une ventouse (51) permettant le maintien en position de l'unité (5) sur la pièce ;
∘ un dispositif de génération de vide, configuré pour mettre en dépression la ventouse (51);
l'unité (5) motorisée étant articulée par rapport au bras transversal selon un pivot d'axe (A) parallèle audit bras transversal.

2. Machine-outil selon la revendication 1, dont le système de déplacement comporte une chenille (52) dont une bande de roulement comporte une pluralité de ventouses (51).

3. Machine-outil selon la revendication 2, comportant en outre un distributeur (8) pour la répartition du vide issu du dispositif de génération de vide vers les ventouses (51) de la bande de roulement de la chenille (52).

4. Machine-outil selon la revendication 3, dans laquelle le distributeur (8) comporte une poulie (81) montée en rotation sur un cylindre de distribution (82), la poulie (81) comportant sur une face latérale des orifices (83) régulièrement répartis en cercle, le cylindre de distribution (82) comportant, sur une face en contact avec la face latérale de la poulie (81) comportant les orifices (83), une rainure (84) en arc de cercle en regard d'au moins l'un des orifices (83) de la poulie.

5. Machine-outil selon la revendication 4, la rainure (84) ayant une forme d'arc de cercle s'étendant sur un angle compris entre 90° et 180°.

6. Machine-outil selon la revendication 1, dans laquelle le système de déplacement comporte une roulette (56) motorisée.

7. Machine-outil selon la revendication 6, dans laquelle l'unité 5 comporte un capot (59) extérieur comportant une face ouverte autour de laquelle est disposée une jupe (57) périphérique, l'ensemble capot (59) extérieur et jupe (57) périphérique formant une ventouse (51) permettant le maintien en position de l'unité sur la pièce.

8. Machine-outil selon la revendication 7, dans laquelle la jupe (57) périphérique comporte un revêtement en polytétrafluoroéthylène.

9. Machine-outil selon la revendication 1, dans laquelle le système de déplacement comporte au moins deux éléments motorisés, positionnés de part et d'autre de la ventouse (51).

10. Machine-outil selon la revendication 9, dans laquelle les éléments motorisés sont des roulettes (56) ou des chenilles.

11. Machine-outil selon la revendication 9 ou la revendication 10, comportant un ou plusieurs groupes de deux ventouses (51), deux éléments motorisés étant positionnés de part et d'autre de chaque groupe de deux ventouses (51).

12. Machine-outil selon l'une des revendications précédentes, comportant deux unités élémentaires motorisées, réparties de part et d'autre du bras transversal (3).

13. Machine-outil selon l'une des revendications précédentes, dans laquelle le bras transversal comprend un système de déplacement de l'outil en translation le long du bras transversal.

14. Machine-outil selon l'une quelconque des revendications précédentes, comportant un dispositif choisi parmi : un capteur de tour lié à une pièce en rotation du dispositif de déplacement, un capteur d'effort sur le bras transversal et un capteur d'effort sur le rail longitudinal, un capteur angulaire configuré pour déterminer l'angle entre le bras transversal et le rail longitudinal.

## Patentansprüche

1. Werkzeugmaschine zur Durchführung von Arbeitsgängen an einem Teil, welche umfasst:
• eine Längsschiene (1), die dafür ausgebildet ist, gegenüber dem Teil positioniert zu werden;
• einen Querarm (3), der zu der Längsschiene (1) orthogonal ist und ein erstes Ende (31) aufweist, das an der Längsschiene (1) translationsbeweglich angebracht ist;
• ein Werkzeug (4), das von dem Querarm (3) getragen wird;
• wenigstens eine motorisierte Einheit (5), die an einem zweiten Ende (32) des Querarmes (3) angeordnet ist und aufweist:
∘ ein Verstellsystem zum Ausführen einer Kriechbewegung auf dem Teil parallel zu der Längsschiene (1);
∘ wenigstens einen Saugnapf (51), der das Halten der Einheit (5) in ihrer Position auf dem Teil ermöglicht;
∘ eine Vorrichtung zur Vakuumerzeugung, die dafür ausgebildet ist, an den Saugnapf (51) einen Unterdruck anzulegen;
wobei die motorisierte Einheit (5) bezüglich des Querarmes um einen Drehzapfen mit einer zu dem Querarm parallelen Achse (A) beweglich angelenkt ist.

2. Werkzeugmaschine nach Anspruch 1, deren Verstellsystem eine Raupenkette (52) aufweist, von der ein Laufstreifen mehrere Saugnäpfe (51) aufweist.

3. Werkzeugmaschine nach Anspruch 2, welche außerdem einen Verteiler (8) zur Verteilung des von der Vorrichtung zur Vakuumerzeugung erzeugten Vakuums auf die Saugnäpfe (51) des Laufstreifens der Raupenkette (52) aufweist.

4. Werkzeugmaschine nach Anspruch 3, wobei der Verteiler (8) eine Rolle (81) aufweist, die auf einem Verteilzylinder (82) drehbar gelagert ist, wobei die Rolle (81) an einer Seitenfläche Öffnungen (83) aufweist, die gleichmäßig auf einer Kreislinie verteilt sind, wobei der Verteilzylinder (82) auf einer Fläche, die sich mit der die Öffnungen (83) aufweisenden Seitenfläche der Rolle (81) in Kontakt befindet, eine kreisbogenförmige Rille (84) aufweist, die wenigstens einer der Öffnungen (83) der Rolle gegenüberliegt.

5. Werkzeugmaschine nach Anspruch 4, wobei die Rille (84) die Form eines Kreisbogens hat, der sich über einen Winkel zwischen 90° und 180° erstreckt.

6. Werkzeugmaschine nach Anspruch 1, wobei das Verstellsystem eine motorisierte Laufrolle (56) aufweist.

7. Werkzeugmaschine nach Anspruch 4, wobei die Einheit (5) eine äußere Abdeckhaube (59) aufweist, die eine offene Seite aufweist, um die herum eine Umfangsschürze (57) angeordnet ist, wobei die Gesamtheit aus äußerer Abdeckhaube (59) und Umfangsschürze (57) einen Saugnapf (51) bildet, der das Halten der Einheit in ihrer Position auf dem Teil ermöglicht.

8. Werkzeugmaschine nach Anspruch 7, wobei die Umfangsschürze (57) einen Überzug aus Polytetrafluorethylen aufweist.

9. Werkzeugmaschine nach Anspruch 1, wobei das Verstellsystem wenigstens zwei motorisierte Elemente aufweist, die beiderseits des Saugnapfes (51) positioniert sind.

10. Werkzeugmaschine nach Anspruch 9, wobei die motorisierten Elemente Laufrollen (56) oder Raupenketten sind.

11. Werkzeugmaschine nach Anspruch 9 oder Anspruch 10, welche eine oder mehrere Gruppen von zwei Saugnäpfen (51) aufweist, wobei zwei motorisierte Elemente beiderseits jeder Gruppe von zwei Saugnäpfen (51) positioniert sind.

12. Werkzeugmaschine nach einem der vorhergehenden Ansprüche, welche zwei motorisierte elementare Einheiten aufweist, die beiderseits des Querarmes (3) angeordnet sind.

13. Werkzeugmaschine nach einem der vorhergehenden Ansprüche, wobei der Querarm ein System zur translatorischen Verstellung des Werkzeugs entlang des Querarmes umfasst.

14. Werkzeugmaschine nach einem der vorhergehenden Ansprüche, welche eine Vorrichtung aufweist, die aus Folgendem ausgewählt ist: einem Drehzahlsensor, der mit einem sich drehenden Teil der Verstellvorrichtung verbunden ist, einem Kraftsensor am Querarm und einem Kraftsensor an der Längsschiene, einem Winkelsensor, der dafür ausgebildet ist, den Winkel zwischen dem Querarm und der Längsschiene zu bestimmen.

## Claims

1. Machine tool for performance of operations on a part, comprising:
a longitudinal rail (1) configured to be positioned relative to the part;
a transverse arm (3) orthogonal to the longitudinal rail (1), comprising a first end (31) mounted in translation on the longitudinal rail (1);
a tool (4) carried by the transverse arm (3);
at least one motorized unit (5) arranged at a second end (32) of the transverse arm (3) and comprising:
a movement system for crawling over the part parallel to the longitudinal rail (1);
at least one sucker (51) allowing the unit (5) to be held in position on the part;
a vacuum generator device configured to apply a vacuum to the sucker (51);
the motorized unit (5) being articulated relative to the transverse arm around a pivot with axis (A) parallel to said transverse arm.

2. Machine tool according to Claim 1, the movement system of which comprises a crawler (52), a running track of which comprises a plurality of suckers (51)

3. Machine tool according to Claim 2, also comprising a distributor (8) for distributing the vacuum provided by the vacuum generator device to the suckers (51) of the running track of the crawler (52).

4. Machine tool according to Claim 3, wherein the distributor (8) comprises a pulley (81) mounted in rotation on a distribution cylinder (82), the pulley (81) comprising, on a lateral face, orifices (83) distributed regularly in a circle, the distribution cylinder (82) comprising, on a face in contact with the lateral face of the pulley (81) comprising the orifices (83), an arcuate groove (84) facing at least one of the orifices (83) of the pulley.

5. Machine tool according to Claim 4, the groove (84) with an arcuate form extending over an angle between 90° and 180°.

6. Machine tool according to Claim 1, wherein the movement system comprises a motorized roller (56).

7. Machine tool according to Claim 6, wherein the unit (5) comprises an outer cover (59) with an open face, around which a peripheral skirt (57) is arranged, the assembly of outer cover (59) and peripheral skirt (57) forming a sucker (51) allowing the unit to be held in position on the part.

8. Machine tool according to Claim 7, wherein the peripheral skirt (57) comprises a coating of polytetrafluoroethylene.

9. Machine tool according to Claim 1, wherein the movement system comprises at least two motorized elements positioned on either side of the sucker (51).

10. Machine tool according to Claim 9, wherein the motorized elements are rollers (56) or crawlers.

11. Machine tool according to Claim 9 or Claim 10, comprising one or more groups of two suckers (51), two motorized elements being positioned on either side of each group of two suckers (51).

12. Machine tool according to any of the preceding claims, comprising two motorized elementary units distributed on either side of the transverse arm (3).

13. Machine tool according to any of the preceding claims, wherein the transverse arm comprises a system for moving the tool in translation along the transverse arm.

14. Machine tool according to any of the preceding claims, comprising a device selected from: a rotation sensor connected to a rotating part of the movement device, a force sensor on the transverse arm and a force sensor on the longitudinal rail, an angle sensor configured to determine the angle between the transverse arm and the longitudinal rail.
